# EUROPEAN PATENT SPECIFICATION

(11) **EP 1 446 260 B1**
(45) Date of publication and mention of the grant of the patent: **25.11.2009**
(21) Application number: 02779068.2
(22) Date of filing: 21.11.2002
(51) Int. Cl.: B23K 35/00, B23K 35/02

(54) **Method for manufacturing an article of manufacture for use in a fluxless brazing process.**
Verfahren zum Herstellen eines Verarbeitungsgegenstandes für die Verwendung bei einem Lötverfahren ohne Flussmittel.
Procédé pour fabriquer un article de manufacture destiné à être utilisé dans un procédé de brasage sans flux.

(30) Priority: 21.11.2001 US 990507
(43) Date of publication of application: 18.08.2004
(60) Divisional application: 09156272.8
(73) Proprietor: Dana Canada Corporation, Oakville, Ontario L6K 3E4 (CA)
(72) Inventor: GRAHAM, Michael, E., Evanston, IL 60201 (US); HOFFMAN, Richard, A., Deceased (US); CHEADLE, Brian, E., Bramalea, Ontario L6T 1M1 (CA); DOCKUS, Kostas F., deceased (US); KRUEGER, Robert H., SPRING GROVE, Illinois 60081-8129 (US)
(74) Representative: Meissner, Bolte & Partner
(86) International application number: PCT/CA2002/001762
(87) International publication number: WO 2003/045618

(56) References cited:
- EP-A- 0 595 601
- EP-A- 0 605 323
- WO-A-00/71784
- US-A- 3 597 658

## Description

### FIELD OF THE INVENTION

The invention addresses the objective of achieving a cladless brazing material system, while maintaining a fluxless brazing system.

### BACKGROUND OF THE INVENTION

Brazing commonly involves the use of aluminum-silicon clad aluminum brazing sheet composites. Because sophisticated rolling mill practices are required to produce this traditional composite, a premium cost is involved over conventional flat rolled sheet and strip. Also, available alloy compositions are limited by mill product standardization, by casting limitations, or by scrap recovery considerations that affect the economy of the overall casting or mill operation.

Such conventional brazing alloys can be brazed using fluxless brazing systems, which typically use an electroplated braze-promoting layer. However, there are environmental hazards and liabilities associated with prior art wet electroplating systems for deposition of fluxless braze modifiers. Furthermore, there are limitations on the range of material strip or component dimensions which can be electroplated in high volume production, for example the constraints of fixed size plating cells limit the maximum plateable strip width.

WO00/71784 discloses a brazing sheet product in which a layer comprising nickel is plated onto a surface of a clad layer made of an aluminum-silicon alloy. US 3597658 discloses a semiconductor device structure comprising an aluminum substrate having a zinc layer on the surface and a layer of nickel on the zinc layer.

### SUMMARY OF THE INVENTION

The invention provides a method for manufacturing an article of manufacture for use in a fluxless brazing process, comprising: (a) providing a metal substrate; (b) applying to the substrate a eutectic-forming layer comprising a material which forms a eutectic with the metal substrate; and (c) applying to the eutectic-forming layer a braze-promoting layer comprising one or more metals selected from the group comprising nickel, cobalt palladium and iron, whereby the entectic-forming layer comprises a coating of silicon, a coating of aluminum-silicon alloy moving 20 percent silcon by weight or higher, or a coating comprised of sequential thin layer of aluminum and silcon

In yet another aspect, the present invention provides a brazing product for fluxless brazing, comprising: (a) a metal substrate; (b) a eutectic-forming layer applied on the metal substrate and comprising a material which forms a eutectic with the metal substrate; and (c) a braze-promoting layer comprising one or more metals selected from the group comprising nickel, cobalt palladium and iron, whereby the entectic-forming layer comprises a coating of silicon, a coating of aluminum-silicon alloy moving 20 percent silcon by weight or higher, or a coating comprised of sequential thin layer of aluminum and silcon.

### BRIEF DESCRIPTION OF THE DRAWINGS

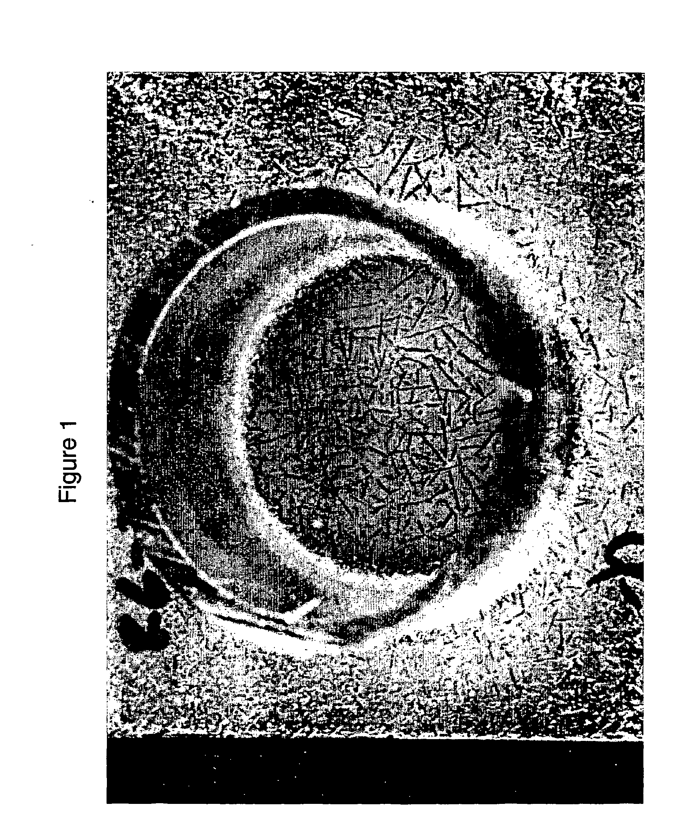

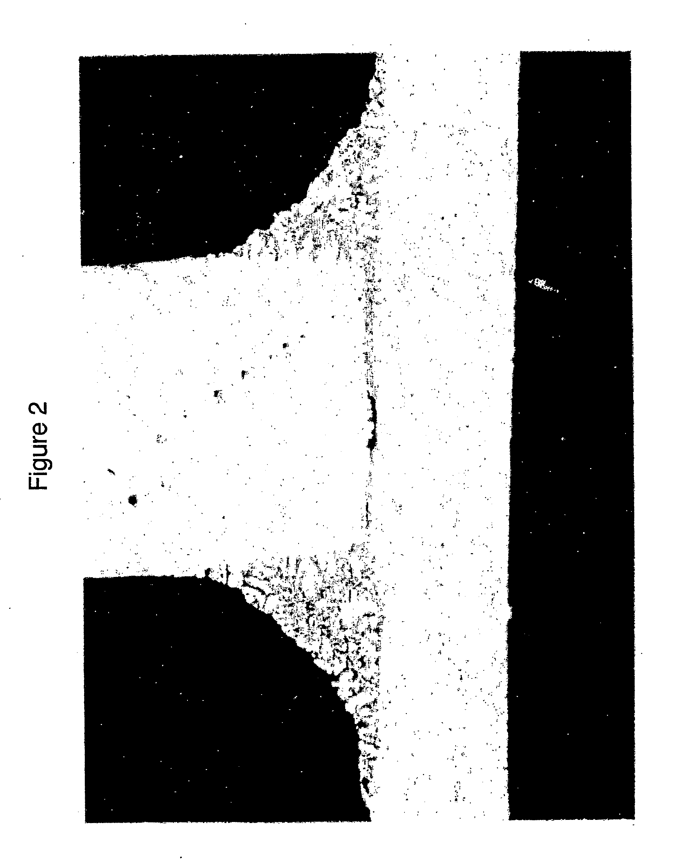

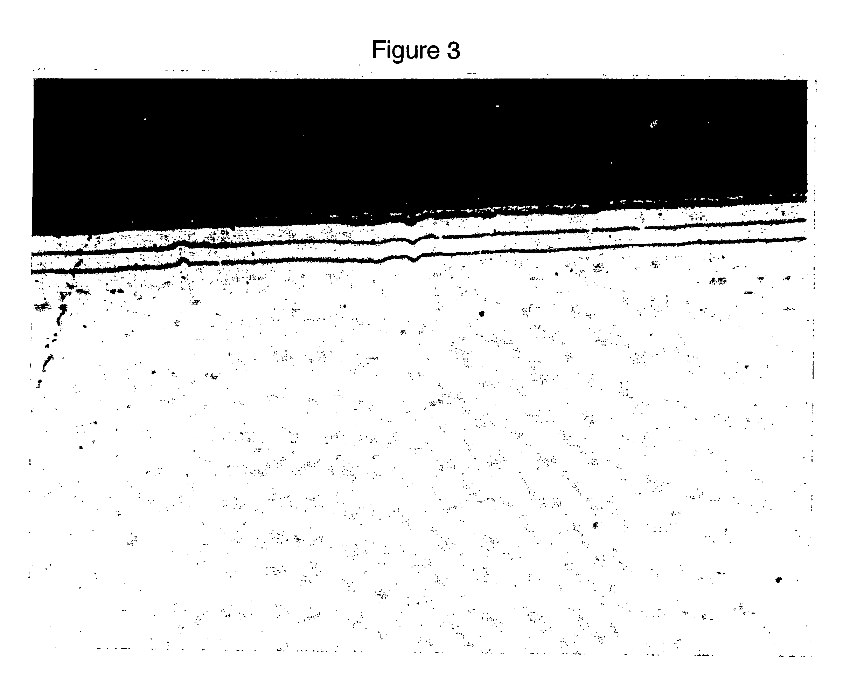

Figures 1 to 3 are photographs illustrating a brazed assembly according to a preferred embodiment of the invention.

### DETAILED DESCRIPTION OF PREFERRED EMBODIMENTS

The present invention provides an in-situ filler metal forming material system that may eliminate the need for separately clad filler metal (or separately provided, for example as preform, etc), while maintaining a fluxless brazing method. The present invention also provides an adjustable material braze system, so that for example, braze fillet size or fluidity may be adjusted according to the product requirements, or on different parts of the same product, for example opposite sides of the same brazing sheet.

The inventors have also recognized that such a system can be applied to provide a range of filler metal compositions, so that both low braze temperatures and normal Al-si braze temperatures, may be achieved in a fluxless format. The ability to tailor the material system (filler metal, and braze promoters...along with braze modifiers, bonding layers, and temperature modifiers) provides significantly increased flexibility in application to aluminum alloy systems that are either not now brazeable, or not available in forms suitable for brazing. These include, for instance, high alloy content 7xxx, 2xxx, 6xxx or 8xxx series aluminum, or aluminum castings and die-castings. Specific alloys to which a Si eutectic forming layer has been applied include 3003, 5052 (2.8% Mg) and 1100 alloys. The adjustable braze response characteristics are applicable to demanding product applications, such as internal joints of heat exchangers, or brazing of intricate flow field channels formed in metal plate fuel cell engines.

The inventors have developed PVD deposition methods and layered sequence compositions, including ancillary methods to enable the practical achievement of "dry" material cleaning methods to allow preferred inline deposition processes. Successfully demonstrated dry cleaning techniques such as plasma or ion-cleaning are important steps in minimizing the environmental impact of the brazing process, and have been demonstrated to be practical as well.

The proposed fluxless brazing system begins with a substrate, which may preferably comprise an aluminum sheet material which may comprise pure aluminum, any one of a number of aluminum alloys, or a dissimilar metal coated with aluminum, eg. aluminum-coated titanium or steel. Examples of specific aluminum substrates, which can be used, are aluminum AA1100, 3003, 5xxxx, and 6xxx series aluminum alloys. In the case of 6xxx, or 5xxxx series aluminum alloys, which contain 1 or 2% or even 3% Mg, the diffusion of Mg from the core into the coating may be exploited to assist in the braze reaction, provided that a coating system using Ni as a topcoat braze promoter is employed. The small amounts of Mg that can diffuse into the Si or liquid eutectic film during brazing, may assist the braze-promoting reaction of Ni in this case, since Mg itself is a braze promoter and the applicant has discovered that the use of Ni braze promoters can provide a synergistic benefit with materials containing small amounts of Mg. It is further believed that substrates containing large amounts of alloying elements, where such elements might otherwise be expected to diffuse to the surface during brazing and cause deleterious effects, can be exploited by the developed invention by depositing or providing suitable barrier coatings, which may include aluminum or Ti etc. In such highly alloyed aluminum substrates, for example high Zn 7xxx alloys, or Al-Li 2xxx or 8xxx alloys, a suitable low temperature filler metal system may be needed to accommodate the depressed melting temperature ranges of these alloyed materials.

The substrate may comprise aluminum or one of the aluminum alloys mentioned above. Alternatively, depending on the composition of the eutectic-forming layer, the substrate could be comprised of one of the dissimilar metals mentioned in U.S. Patent No. 7,000,823 entitled improvements in Fluxless Brazing", issued on February 21, 2006, and incorporated herein by reference.

The Si eutectic forming layer is deposited by physical vapor deposition (PVD) in one or more steps. Here, PVD is understood to include either sputtering including magnetron sputtering, and also electron beam (EB) evaporation. For practical benefits such as rates of deposition, EB coating methods are preferred. Cathodic arc is another commercial PVD system, which may be suitable for certain metals. It may be preferred to use a combination of source types, depending on the specific metal being deposited. For example, EB-evaporation is likely best for Si, but this may or may not be best for Pb or Bi. However, comparatively little Pb is required, so a sputtered rate may be acceptable, and more efficient use of the Pb might be possible. The Ni or other metal such as Pd, likewise does not require much thickness and other source options might be possible, although EB-evaporation may still be preferred.

Sputtering of top layers may help to hold temperature of the sheet down and it puts less material on the chamber walls and more on the substrate. As applied, the Si coating serves as a eutectic-forming layer. Preferably, the thickness of the Si coating in the system of the invention will be from about 3 to about 20 microns, more preferably from about 5 to about 10 microns, when combined with the braze promoters described below. Where such braze promoters are not used, a thicker Si coating may be necessary to obtain equivalent braze quality; or equivalent braze quality may be unachievable, or a brazing flux may become a necessary compensator. Similarly, in combination with other eutectic formers it may be possible to use thinner Si coatings; however so far it appears that a Si layer of about 1 micron should be in contact with the Ni braze promoter. Brazing (fluxless) without this layer is very difficult indeed in this particular system; in an alternate system, for instance an Al-Zn, or Zn-Mg etc liquid forming system, Si may not be as important.

An extremely thin [20-50 nm] layer of braze modifier is preferably deposited at the interface of the Si and the braze promoting layer. Preferred braze modifiers are selected from the group comprising bismuth, lead, lithium, antimony, magnesium, strontium and copper. Bismuth and lead are preferred where the eutectic-forming layer comprises silicon and the braze-promoting layer is nickel-based.

Too thick a layer of braze modifier may interfere with contact of Ni and Si. It may also be preferred to locate this layer at the interface between the aluminum substrate and the eutectic-forming layer, although it can interfere with adhesion of the eutectic forming layer to the substrate, and can cause peeling of the coating in some cases due to heat transfer to the aluminum substrate during deposition of the Si, or due to the time of exposure to the e-beam source, associated radiation from the vapor cloud, and the heat of condensation of the Si vapor on the substrate. To prevent this, it may be preferred to apply the Si as a plurality of layers, with a cooling phase between the depositions of each layer. In addition, provision may be made for substrate cooling during coating, for example by contact with chilled surfaces on the back side of the sheet being coated, which is limited by thermal transfer of materials and contact time and geometry.

After formation of the silicon coating, the silicon coated aluminum sheet is provided with coatings of one or more braze promoters and optional braze modifiers. The braze promoters are selected from one or more members of the group comprising nickel, cobalt, iron or palladium. More preferably, the braze-promoting layer is nickel-based and may preferably comprise pure nickel or nickel in combination with one or more alloying elements and/or impurities selected from the group comprising cobalt, iron, lead, bismuth, magnesium, lithium, antimony and thallium. Specific examples of nickel-based braze-promoting layers are nickel, nickel-bismuth, nickel-lead, nickel-cobalt, nickel-bismuth-cobalt, nickel-lead-cobalt, nickel-lead-bismuth, nickel-bismuth-antimony, etc. The preferred amounts of alloying elements may preferably be as disclosed in U.S. Patent No. 7,000,823.

As an alternative to the above embodiment, the substrate can be coated with an Al-Si alloy; or sequential thin layers of Al and Si to create a desired composition of filler metal. Experiments suggest that an initial layer of thin aluminum or silicon, having a thickness of not more than about 1 micron, is preferred for adhesion of the Al-Si layer and also for the Si eutectic-forming layer described above. Similarly, a thin layer of silicon should be applied immediately under the Pb or Bi/Ni coating. A benefit of the sequential thin-layered approach is that heating and the stress build-up in the coating from the rate determining Si deposition step, is reduced. A thin layer of zinc, or an aluminum-zinc alloy, may be substituted for the 1 micron preferred Al or Si bonding layer or interlayer.

Still another method of depositing an Al-Si filler metal-forming material layer, is to use the PVD process to deposit a pre-alloyed Al-Si alloy. In this case, it may be preferable to deposit a hypereutectic composition, ie 20 % Si or higher, with suitable provisions made to compensate for unequal deposition rates of the two-phase alloy. Similarly, it will be obvious that other alloy additions such as Mg or Cu may be added to the Al-Si alloy, to achieve ternary or quaternary, etc., alloy compositions. Zinc or zinc-aluminum may also be used in conjunction with the silicon coating, and the zinc may be prealloyed with antimony or magnesium.

In one embodiment of the system, an extremely thin layer of Pb or Bi is deposited on top of the Si coating. This is followed by application of a topcoat of Ni having a thickness of about 1 micron, or at least 0.25 to 0.5 microns.

In another embodiment of the system, Fe or Co are used to replace Ni or as alloy additions to Ni.

In yet another embodiment of the system, a layer of Zn or Al-Zn is provided in addition to the Si coating and the braze promoters. This additional layer may preferably be located underneath the Si coating or immediately on top of it. Alternatively, the Si could be pre-alloyed with Zn or Al-Zn. The use of Pb or Bi and the Ni layers may enhance the performance of these alloys.

In yet another embodiment, Li may be added, possibly to replace or supplement the Pb or Bi or Sb. Li may preferably be deposited in an alloyed form, such as Al-Li, due its extreme reactivity, and is likely present as an extremely thin Al-Li layer which may be located underneath the Si or Zn, or on top of the Zn or Si, but below the upper-most nickel braze promoter. If Sb is deposited it may similarly be deposited as an alloy with Al, or Zn, or as a constituent of a Zn-Al alloy.

In yet another embodiment, a barrier coating may be provided to temporarily restrict diffusion of Si or Zn into the aluminum core; or to limit diffusion of undesireable core elements into the liquid filler metal. The barrier coating may comprise a thin coating of Ni, Ti, Ta, Cu, Nb, Sn, Pb, Bi or Al. Topcoats of braze promoters would be applied as above. During brazing, the barrier coating is eventually consumed so that eventual alloying with the aluminum core may occur, while permitting most of the liquid eutectic filler metal to remain liquid to effect the braze joint. Alternatively, if a barrier coating is required to prevent migration of species from the core into the liquid forming layer or vice versa, the liquid former will need to be provided with other material layers so that it can form its own liquid without access to the substrate, and a thicker or more resistant barrier coating may then be used.

EXAMPLES

EXAMPLE 1 - The method according to the invention was applied as follows:
Substrate : AA3003 plate, AA3003 tube.
Cleaning method: caustic cleaned plate (coupon), ie etch, rinse, desmut, rinse, dry.
Coating sequence: 3.4 µm Al/0.9 µm Si/3,4 µm Al/0.9 µm Si/3,4 µm Al/1.25 µm Si/00.005 µm Pb/1.5 µm Ni.
Braze Quality Very Good (Good to excellent based on 4 samples run per test)

Purpose of this coating sequence: 1) to deposit an Al-Si alloy on the surface of the substrate, using a sequential layer approach. This approach reduces stress in each coating layer, and theoretically reduces reaction distance between Si and Al, for melting. It was found that as far as brazing goes, it does not make much difference whether the Al-Si is applied in sequence, or just one layer of Si in contact with the Al substrate, as long as the Si layers are not too thick.

Preferably, the last layer deposited is Si, then a very thin Pb (or Bi) layer is applied, and then Ni. This is a particularly preferred embodiment. Furthermore, it is preferred that the Ni be essentially in contact with the Si, such that the very thin Pb or Bi layer does not degrade contact between the Ni and Si, and in fact it is speculated that the low melting Bi or Pb may actually improve contact during brazing.

Figure 1 illustrates the brazed plate and tube combination, at a magnification of 3-4x. The tube is 0.75" (19 mm) in diameter. Figure 2 illustrates a cross-section through the tube wall to plate joint, at a magnification of 38x. There is excellent wetting and fillet formation from the in-situ formed eutectic. Figure 3 illustrates a cross-section of the layered deposit, in the as-deposited condition, i.e. prior to braze. It is possible to resolve the individual layers shown in Figure 3, with Ni on the outermost (upper) surface.

### EBEAM EXAMPLES 2-12

Coating of the substrates was carried out by pretreating approximately 4"x4" (10.1 cm x 10.1 cm) coupons of the target substrate through various means including (a) solvent degreasing, (b) caustic cleaning, whereby the coupon is immersed in 10% Oakite 360 etch solution for approximately 45 seconds, tap water rinsed, deoxidized in Oakite L25 for 10 seconds, tap water rinsed and dried, (c) mechanical brush cleaned with 3M 7A brushes, (d) sputtering with an inert gas in vacuum, (e) ion etching. Multilayer coatings were applied to the target surface through electron beam physical vapour deposition of variously prepared sources. The coupons were divided into four approximately equal samples and assessed through brazing.

Coating thicknesses were assessed using a deposition rate detector as well as microscopic (SEM) assessment of metallurgical sections.

Braze tests were carried out to demonstrate the effectiveness of the coating on a target substrate sheet. In each test, braze quality was determined by placing the flat, cut end of an AA3003 O-temper aluminum tube [0.65" (16.5 mm) ID x 0.75" (19 mm) OD, cut to 0.5" (12.7 mm) length and ground flat on a 1.5" x 1.5" (38.1 mm x 38.1 mm) coupon of target substrate sheet and heating the arrangement in a preheated furnace in a flowing nitrogen atmosphere to approximately 1100°F (593°C) for a dwell time of approximately 1 minute at maximum temperature. Braze quality was reported as excellent, very good, good, fair and poor based on visual attribute data such as fillet size, wetting characteristics, surface appearance, lustre, etc.

### EXAMPLE 2

AA5052 sheet samples were prepared through (a) sputter cleaning and (b) mechanical brushing followed by deposition of 16 µm silicon to the target interface, incremental deposition to the newly formed surface of 0.03 µm lead then 1 µm nickel. The coated sheet samples were subdivided into four coupons each for individual braze assessment. Both sets of coupons exhibited an excellent braze.

### EXAMPLE 3

An AA3003 sheet sample was prepared through caustic etching followed by deposition of 16 µm silicon to the target interface, incremental deposition to the newly formed surface of 0.03 µm lead then 1.0 µm nickel. The coated sheet sample was subdivided into four coupons for individual braze assessment. All coupons exhibited an excellent braze.

### EXAMPLE 4

An AA3003 sheet sample was prepared through caustic etching followed by deposition of 16 µm silicon to the target interface, incremental deposition to the newly formed surface of 0.037 µm bismuth then 1.0 µm nickel. The coated sheet sample was subdivided into four coupons for individual braze assessment. Three coupons exhibited an excellent braze, while one exhibited a good braze.

### EXAMPLE 5

AA3003 sheet samples were prepared through ion etching for (a) 20 minutes, (b) 30 minutes followed by deposition of 16 µm silicon to the target interface, incremental deposition to the newly formed surface of 0.03 µm lead then 1.0 µm nickel. The coated sheet samples were subdivided into four coupons for individual braze assessment. The 20 minute etched coupons exhibited 2 excellent and 2 good brazed samples. The 30 minute etched coupons exhibited three excellent and 1 good braze.

### EXAMPLE 6

An AA3003 sheet sample was prepared through caustic etching followed by deposition of 28 µm silicon to the target interface, incremental deposition to the newly formed surface of 0.03 µm lead then 1.0 µm nickel. The coated sheet sample was subdivided into four coupons for individual braze assessment. All coupons exhibited an excellent braze.

### EXAMPLE 7

AA3003 sheet samples were prepared through caustic etching followed by deposition of 6 µm silicon to the target interface, incremental deposition to the newly formed surface of 0.03 µm lead then (a) 0.05 µm nickel on one sheet and (b) 1.0 µm nickel on the second. The coated sheet samples were subdivided into four coupons for individual braze assessment. The 0.05 µm coupons exhibited 2 excellent and 2 good brazed samples. The 1.0 µm coupons all exhibited an excellent braze.

### EXAMPLE 8

AA3003 sheet samples were prepared through caustic etching followed by deposition of 16 µm silicon to the target interface, incremental deposition to the newly formed surface of (a) no lead or nickel on the first and (b) 0.03 µm lead then 1.0 µm nickel on the second. The coated sheet samples were subdivided into four coupons for individual braze assessment. The non-lead/nickel coupons exhibited 2 good, 1 fair and 1 poor brazed sample. The lead containing sample exhibited 2 excellent and 2 good samples.

### EXAMPLE 9

AA3003 sheet samples were prepared through caustic etching followed by incremental deposition of alternating layers of aluminum and silicon as follows 2.0 Al, 1.8 Si, 4.0 Al, 1.8 Si, 4.0 Al, 1.75 Si µm to the target interface and subsequent deposition to the newly formed surface of (a) 0.5 µm nickel and (b) 0.01 µm lead then 0.5 µm nickel. The coated sheet samples were subdivided into four coupons for individual braze assessment. Three of the non-leaded samples exhibited a fair braze and one sample exhibited a poor braze. The leaded samples all exhibited an excellent braze.

### EXAMPLE 10

An AA3003 sheet sample was prepared through caustic etching followed by deposition of 10 µm zinc to the target interface, incremental deposition to the newly formed surface of 0.25 µm nickel. The coated sheet sample was subdivided into four coupons for individual braze assessment. All coupons exhibited fair braze.

### EXAMPLE 11

An AA3003 sheet sample was prepared through caustic etching followed by deposition of 25 µm zinc to the target interface, incremental deposition to the newly formed surface of 0.5 µm silicon and 0.25 µm nickel. The coated sheet sample was subdivided into four coupons for individual braze assessment at 1100°F (593°C). Three coupons exhibited good braze. Two coupons of the same composition were brazed at 1000°F (538°C) and exhibited good braze.

### EXAMPLE 12

An AA3003 sheet sample was prepared by a novel combination of ion cleaning with oxygen for 3 minutes followed by a 30 minute ion etch then deposition of 5 µm silicon to the target interface, incremental deposition to the newly formed surface of 0.03 µm lead then 1.0 µm nickel. The coated sheet sample was subdivided into four coupons for individual braze assessment. All coupons exhibited a very good braze.

## Claims

1. A method for manufacturing an article of manufacture for use in a fluxless brazing process, comprising:
(a) providing a metal substrate;
(b) applying to the substrate a eutectic-forming layer comprising a material which forms a eutectic composition with the metal substrate; and
(c) applying to the eutectic-forming layer a braze-promoting layer comprising one or more metals selected from the group consisting of nickel, cobalt, palladium and iron;
**characterised in that** the eutectic-forming layer is applied to the substrate by physical vapor deposition and comprises a coating of silicon, a coating of an aluminum-silicon alloy having 20 percent silicon by weight or higher, or a coating comprised of sequential thin layers of aluminum and silicon.

2. The method of claim 1, **characterised in that** the metal substrate is comprised of aluminum or an aluminum alloy, preferably an aluminum alloy selected from the group comprising AA2xxx, AA6xxx, AA7xxx, AA8xxx, AA1100, AA3003 and AA5052 alloys.

3. The method of claim 1, **characterised in that** the metal substrate is selected from the group comprising an aluminum casting alloy, aluminum-coated titanium, aluminum-coated steel and an aluminum-magnesium alloy.

4. The method of claim 1, **characterised in that** the eutectic-forming layer comprises said coating of silicon and **in that** the coating of silicon is deposited in one or more steps.

5. The method of claim 4, **characterised in that** the coating of silicon is deposited by a plurality of steps and wherein the substrate is cooled between silicon deposition steps.

6. The method of claim 4 or 5, **characterised in that** the coating of silicon is deposited in a thickness of from 3 to 20 microns, preferably from 5 to 10 microns.

7. The method of claim 1, **characterised in that** the eutectic-forming layer comprises said coating comprised of sequential thin layers of aluminum and silicon.

8. The method of claim 7, **characterised in that** a layer of silicon is applied directly under the braze-promoting layer, and said silicon layer preferably has a thickness of about 1 micron.

9. The method of claim 1, **characterised in that** the eutectic-forming layer comprises said coating of an aluminum-silicon alloy having 20 percent silicon by weight or higher and **in that** the aluminum and silicon are deposited as an alloy, and the alloy preferably further comprises a metal selected from the group consisting of magnesium and copper.

10. The method of claim 1, **characterised in that** the braze-promoting layer comprises nickel and optionally includes one or more alloying elements selected from the group comprising cobalt, iron, lead, bismuth, magnesium, lithium, antimony and thallium.

11. The method of claim 10, **characterised in that** the braze-promoting layer comprises a nickel-based alloy selected from the group consisting of nickel-bismuth, nickel-lead, nickel-cobalt, nickel-bismuth-cobalt, nickel-lead-cobalt, nickel-lead-bismuth and nickel-bismuth-antimony.

12. The method of claim 1, further comprising the step of applying a braze modifier layer at an interface between the eutectic-forming layer and the braze-promoting layer or at an interface between the metal substrate and the eutectic-forming layer, the braze modifier layer comprising one or more metals selected from the group comprising bismuth, lead, lithium, antimony, magnesium, strontium and copper.

13. The method of claim 12, **characterised in that** the braze modifier layer has a thickness of 20 to 50 nanometers.

14. The method of claim 12, **characterised in that** the braze-promoting layer comprises nickel and wherein the braze modifier layer is selected from the group comprising bismuth and lead.

15. The method of claim 1, **characterised in that** a layer of lithium is deposited in the form of an aluminum-lithium alloy at an interface between the eutectic-forming layer and the braze-promoting layer or at an interface between the metal substrate and the eutectic-forming layer.

16. The method of claim 1, **characterised in that** a layer of antimony is deposited at an interface between the eutectic-forming layer and the braze-promoting layer or at an interface between the metal substrate and the eutectic-forming layer, and the antimony is deposited in the form of an alloy with aluminum or zinc, or as a constituent of a zinc-aluminum alloy.

17. The method of claim 1, further comprising the step of applying an initial layer of aluminum or silicon having a thickness of no more than about 1 micron.

18. The method of claim 17, **characterised in that** a thin layer of zinc, or an aluminum-zinc alloy, is substituted for the initial layer of aluminum or silicon.

19. The method of claim 1, further comprising the step of applying a barrier coating to temporarily restrict diffusion of silicon from the eutectic-forming layer into the metal substrate, the barrier coating comprising one or more elements selected from the group comprising nickel, titanium, tantalum, copper, niobium, tin, lead, bismuth and aluminum.

20. The method of claims 1 to 19, **characterised in that** physical vapor deposition is selected from the group consisting of electron beam evaporation, sputtering and cathodic arc.

## Patentansprüche

1. Verfahren zum Herstellen eines Verarbeitungsgegenstandes für die Verwendung bei einem Lötverfahren ohne Flußmittel, das folgendes aufweist:
(a) Bereitstellen eines Metallsubstrats;
(b) Aufbringen einer eine eutektische Mischung bildenden Schicht auf das Substrat, die ein Material aufweist, das mit dem Metallsubstrat eine eutektische Mischung bildet; und
(c) Aufbringen einer das Löten fördernden Schicht, die ein oder mehrere Metalle aufweist, die aus der Gruppe ausgewählt sind, die aus Nickel, Cobalt, Palladium und Eisen besteht, auf die eine eutektische Mischung bildende Schicht;
**dadurch gekennzeichnet,**
**daß** die eine eutektische Mischung bildende Schicht mit einem PVD-Verfahren auf das Substrat aufgebracht wird und eine Schicht aus Silicium, eine Schicht aus einer Aluminium-Silicium-Legierung mit 20 Gew.-% Silicium oder mehr, oder eine Schicht aufweist, die aus aufeinanderfolgenden dünnen Schichten aus Aluminium und Silicium besteht.

2. Verfahren nach Anspruch 1,
**dadurch gekennzeichnet,**
**daß** das Metallsubstrat aus Aluminium oder einer Aluminiumlegierung, vorzugsweise einer Aluminiumlegierung besteht, die aus der Gruppe ausgewählt ist, die die Legierungen AA2xxx, AA6xxx, AA7xxx, AA8xxx, AA1100, AA3003 und AA5052 umfaßt.

3. Verfahren nach Anspruch 1,
**dadurch gekennzeichnet,**
**daß** das Metallsubstrat aus der Gruppe ausgewählt ist, die eine Aluminiumgießlegierung, mit Aluminium beschichtetes Titan, mit Aluminium beschichteten Stahl und eine Aluminium-Magnesium-Legierung umfaßt.

4. Verfahren nach Anspruch 1,
**dadurch gekennzeichnet,**
**daß** die eine eutektische Mischung bildende Schicht die Schicht aus Silicium aufweist und
**daß** die Schicht aus Silicium in einem oder mehreren Schritten aufgebracht wird.

5. Verfahren nach Anspruch 4,
**dadurch gekennzeichnet,**
**daß** die Schicht aus Silicium mit einer Vielzahl von Schritten aufgebracht wird, wobei das Substrat zwischen den Schritten zum Aufbringen von Silicium abgekühlt wird.

6. Verfahren nach Anspruch 4 oder 5,
**dadurch gekennzeichnet,**
**daß** die Schicht aus Silcium mit einer Dicke von 3 bis 20 µm, vorzugsweise von 5 bis 10 µm aufgebracht wird.

7. Verfahren nach Anspruch 1,
**dadurch gekennzeichnet,**
**daß** die eine eutektische Mischung bildende Schicht die Schicht aufweist, die aus aufeinanderfolgenden dünnen Schichten aus Aluminium und Silicium besteht.

8. Verfahren nach Anspruch 7,
**dadurch gekennzeichnet,**
**daß** eine Schicht aus Silicium direkt unter der das Löten fördernden Schicht aufgebracht wird und die Siliciumschicht vorzugsweise eine Dicke von etwa 1 µm aufweist.

9. Verfahren nach Anspruch 1,
**dadurch gekennzeichet,**
**daß** die eine eutektische Mischung bildende Schicht die Schicht aus einer Aluminium-Silicium-Legierung mit 20 Gew.-% Silicium oder mehr aufweist und daß das Aluminium und das Silicium als eine Legierung aufgebracht werden und die Legierung ferner vorzugsweise ein Metall aufweist, das aus der Gruppe ausgewählt ist, die aus Magnesium und Kupfer besteht.

10. Verfahren nach Anspruch 1,
**dadurch gekennzeichnet,**
**daß** die das Löten fördernde Schicht Nickel und gegebenenfalls ein oder mehrere legierungsbildende Elemente aufweist, die aus der Gruppe ausgewählt sind, die Cobalt, Eisen, Blei, Wismut, Magnesium, Lithium, Antimon und Thallium umfaßt.

11. Verfahren nach Anspruch 10,
**dadurch gekennzeichnet,**
**daß** die das Löten fördernde Schicht eine auf Nickel basierende Legierung aufweist, die aus der Gruppe ausgewählt ist, die aus Nickel-Wismut, Nickel-Blei, Nickel-Cobalt, Nickel-Wismut-Cobalt, Nickel-Blei-Cobalt, Nickel-Blei-Wismut und Nickel-Wismut-Antimon besteht.

12. Verfahren nach Anspruch 1,
das ferner folgendes aufweist:
einen Schritt, bei dem eine Schicht aus einem Modifikationsmittel für das Löten an einer Grenzfläche zwischen der eine eutektische Mischung bildenden Schicht und der das Löten fördernden Schicht, oder an einer Grenzfläche zwischen dem Metallsubstrat und der eine eutektische Mischung bildenden Schicht aufgebracht wird, wobei die Schicht aus dem Modifikationsmittel für das Löten eine oder mehrere Metalle aufweist, die aus der Gruppe ausgewählt sind, die Wismut, Blei, Lithium, Antimon, Magnesium, Strontium und Kupfer umfaßt.

13. Verfahren nach Anspruch 12,
**dadurch gekennzeichnet,**
**daß** die Schicht aus dem Modifikationsmittel für das Löten eine Dicke von 20 bis 50 nm aufweist.

14. Verfahren nach Anspruch 12,
**dadurch gekennzeichnet,**
**daß** die das Löten fördernde Schicht Nickel aufweist, wobei die Schicht aus dem Modifikationsmittel für das Löten aus der Gruppe ausgewählt ist, die Wismut und Blei umfaßt.

15. Verfahren nach Anspruch 1,
**dadurch gekennzeichnet,**
**daß** eine Schicht aus Lithium in Form einer Aluminium-Lithium-Legierung an einer Grenzfläche zwischen der eine eutektische Mischung bildenden Schicht und der das Löten fördernden Schicht, oder an einer Grenzfläche zwischen dem Metallsubstrat und der eine eutektische Mischung bildenden Schicht aufgebracht wird.

16. Verfahren nach Anspruch 1,
**dadurch gekennzeichnet,**
**daß** eine Schicht aus Antimon an einer Grenzfläche zwischen der eine eutektische Mischung bildenden Schicht und der das Löten fördernden Schicht, oder an einer Grenzfläche zwischen dem Metallsubstrat und der eine eutektische Mischung bildenden Schicht aufgebracht wird und
**daß** das Antimon in Form einer Legierung mit Aluminium oder Zink oder als Bestandteil einer Zink-Aluminium-Legierung aufgebracht wird.

17. Verfahren nach Anspruch 1,
das ferner folgendes aufweist:
einen Schritt, bei dem eine erste Schicht aus Aluminium oder Silicium mit einer Dicke von nicht mehr als etwa 1 µm aufgebracht wird.

18. Verfahren nach Anspruch 17,
**dadurch gekennzeichnet,**
**daß** eine dünne Schicht aus Zink oder einer Aluminium-Zink-Legierung die erste Schicht aus Aluminium oder Silicium ersetzt.

19. Verfahren nach Anspruch 1,
das ferner folgendes aufweist:
einen Schritt, bei dem eine Sperrschicht aufgebracht wird, so daß die Diffusion von Silicium aus der eine eutektische Mischung bildenden Schicht in das Metallsubstrat zeitweilig eingeschränkt wird, wobei die Sperrschicht ein oder mehrere Elemente aufweist, die aus der Gruppe ausgewählt sind, die Nickel, Titan, Tantal, Kupfer, Niob, Zinn, Blei, Wismut und Aluminium umfaßt.

20. Verfahren nach den Ansprüchen 1 bis 19,
**dadurch gekennzeichnet,**
**daß** das PVD-Verfahren aus der Gruppe ausgewählt ist, die aus Verdampfen mittels Elektronenstrahl, Zerstäuben (Sputtern) und Kathodenlichtbogen besteht.

## Revendications

1. Procédé pour fabriquer un article de manufacture destiné à être utilisé dans un procédé de brasage sans flux, comprenant les étapes consistant à:
(a) fournir un substrat en métal;
(b) appliquer au substrat une couche de formation eutectique comprenant un matériau qui forme une composition eutectique avec le substrat en métal; et
(c) appliquer à la couche de formation eutectique une couche favorisant la brasure comprenant un ou plusieurs métaux choisis dans le groupe consistant du nickel, du cobalt, du palladium et du fer;
**caractérisé en ce que** la couche de formation eutectique est appliquée sur le substrat par dépôt physique en phase vapeur et comprend un revêtement de silicium, un revêtement d'un alliage d'aluminium-silicium ayant 20 pour cent de silicium en poids ou plus, ou un revêtement composé de fines couches séquentielles d'aluminium et de silicium.

2. Procédé selon la revendication 1,
**caractérisé en ce que** le substrat en métal est composé d'aluminium ou d'un alliage d'aluminium, de préférence un alliage d'aluminium choisi dans le groupe comprenant les alliages AA2xxx, AA6xxx, AA7xxx, AA8xxx, AA1100, AA3003 et AA5052.

3. Procédé selon la revendication 1,
**caractérisé en ce que** le substrat en métal est choisi dans le groupe comprenant un alliage d'aluminium de fonderie, du titane recouvert d'aluminium, de l'acier recouvert d'aluminium et un alliage d'aluminium-magnésium.

4. Procédé selon la revendication 1,
**caractérisé en ce que** la couche de formation eutectique comprend ledit revêtement de silicium et **en ce que** le revêtement de silicium est déposé en une ou plusieurs étapes.

5. Procédé selon la revendication 4,
**caractérisé en ce que** le revêtement de silicium est déposé par une pluralité d'étapes et dans lequel le substrat est refroidi entre les étapes de dépôt de silicium.

6. Procédé selon la revendication 4 ou 5,
**caractérisé en ce que** le revêtement de silicium est déposé sur une épaisseur de 3 à 20 µm, de préférence de 5 à 10 µm.

7. Procédé selon la revendication 1,
**caractérisé en ce que** la couche de formation eutectique comprend ledit revêtement composé de fines couches séquentielles d'aluminium et de silicium.

8. Procédé selon la revendication 7,
**caractérisé en ce qu'**une couche de silicium est appliquée directement sous la couche favorisant la brasure, et ladite couche de silicium a de préférence une épaisseur d'environ 1 µm.

9. Procédé selon la revendication 1,
**caractérisé en ce que** la couche de formation eutectique comprend ledit revêtement d'un alliage d'aluminium-silicium ayant 20 pour cent de silicium en poids ou plus et **en ce que** l'aluminium et le silicium sont déposés sous la forme d'un alliage, et l'alliage comprend en outre de préférence un métal choisi dans le groupe consistant du magnésium et du cuivre.

10. Procédé selon la revendication 1,
**caractérisé en ce que** la couche favorisant la brasure comprend du nickel et contient facultativement un ou plus éléments d'alliage choisis dans le groupe comprenant le cobalt, le fer, le plomb, le bismuth, le magnésium, le lithium, l'antimoine et le thallium.

11. Procédé selon la revendication 10,
**caractérisé en ce que** la couche favorisant la brasure comprend un alliage à base de nickel choisi dans le groupe consistant du nickel-bismuth, du nickel-plomb, du nickel-cobalt, du nickel-bismuth-cobalt, du nickel-plomb-cobalt, du nickel-plomb-bismuth et du nickel-bismuth-antimoine.

12. Procédé selon la revendication 1,
comprenant en outre l'étape consistant à appliquer une couche de modification de brasure au niveau d'une interface entre la couche de formation eutectique et la couche favorisant la brasure ou au niveau d'une interface entre le substrat en métal et la couche de formation eutectique, la couche de modification de brasure comprenant un ou plusieurs métaux choisis dans le groupe comprenant le bismuth, le plomb, le lithium, l'antimoine, le magnésium, le strontium et le cuivre.

13. Procédé selon la revendication 12,
**caractérisé en ce que** la couche de modification de brasure a une épaisseur de 20 à 50 nanomètres.

14. Procédé selon la revendication 12,
**caractérisé en ce que** la couche favorisant la brasure comprend le nickel et dans lequel la couche de modification de brasure est choisie dans le groupe comprenant le bismuth et le plomb.

15. Procédé selon la revendication 1,
**caractérisé en ce qu'**une couche de lithium est déposée sous la forme d'un alliage d'aluminium-lithium au niveau d'une interface entre la couche de formation eutectique et la couche favorisant la brasure ou au niveau d'une interface entre le substrat en métal et la couche de formation eutectique.

16. Procédé selon la revendication 1,
**caractérisé en ce qu'**une couche d'antimoine est déposée au niveau d'une interface entre la couche de formation eutectique et la couche favorisant la brasure ou au niveau d'une interface entre le substrat métallique et la couche de formation eutectique, et l'antimoine est déposé sous la forme d'un alliage avec de l'aluminium ou du zinc ou sous la forme d'un constituant d'un alliage de zinc-aluminium.

17. Procédé selon la revendication 1,
comprenant en outre l'étape consistant à appliquer une couche initiale d'aluminium ou de silicium ayant une épaisseur non supérieure à environ 1 µm.

18. Procédé selon la revendication 17,
**caractérisé en ce qu'**une fine couche de zinc ou un alliage d'aluminium-zinc, est remplacée par la couche initiale d'aluminium ou de silicium.

19. Procédé selon la revendication 1,
comprenant en outre l'étape consistant à appliquer un revêtement de barrière pour limiter temporairement la diffusion de silicium de la couche de formation eutectique dans le substrat en métal, le revêtement de barrière comprenant un ou plusieurs éléments choisis dans le groupe comprenant le nickel, le titane, le tantale, le cuivre, le niobium, l'étain, le plomb, le bismuth et l'aluminium.

20. Procédé selon les revendications 1 à 19,
**caractérisé en ce que** le dépôt physique en phase vapeur est choisi dans le groupe consistant de l'évaporation par faisceau d'électrons, la pulvérisation cathodique et l'arc cathodique.
